# EUROPEAN PATENT SPECIFICATION

(11) **EP 2 699 450 B1**
(45) Date of publication and mention of the grant of the patent: **08.04.2015**
(21) Application number: 12722863.3
(22) Date of filing: 18.04.2012
(51) Int. Cl.: B60P 3/39, A47C 7/02

(54) **REST STRUCTURE, IN PARTICULAR FOR A VEHICLE**
ABLAGESTRUKTUR, INSBESONDERE FÜR EIN FAHRZEUG
STRUCTURE DE REPOS, EN PARTICULIER POUR VÉHICULE

(30) Priority: 21.04.2011 IT TO20110355
(43) Date of publication of application: 26.02.2014
(73) Proprietor: Red S.r.l., 10137 Torino (TO) (IT)
(72) Inventor: CALIFFE, Rosario, I-10136 Torino (TO) (IT)
(74) Representative: Camolese, Marco
(86) International application number: PCT/IB2012/051936
(87) International publication number: WO 2012/143863

(56) References cited:
- EP-A1- 1 207 074
- WO-A1-2009/045131
- DE-A1-102007 040 198
- FR-A5- 2 087 577
- JP-A- 61 202 255

## Description

The present invention relates to a rest structure, in particular for a vehicle, according to the preamble of claim 1.

It is known that, nowadays, saving space has become a primary need, which is being faced in many ways and with different solutions.

In fact, houses have become smaller and smaller, and so have the spaces thereof where one can live in. In addition, this problem is felt even more on vehicles (such as boats, campers, caravans and other similar vehicles), wherein the space available to the user is further reduced.

In order to solve, at least partially, this problem, it is known to use in such environments solutions that allow saving space through manifold utilization of a single furniture accessory.

For example, the so-called sofa bed has been known for a long time in the art, which is equipped with a sort of "open/close" system to make it a furniture accessory useful for trying to solve the problem of insufficient room.

Many types of sofa beds exist, which can be grouped according to the opening mechanism in use (i.e.: conventional, folding, flip-open and drawer-style).

In the conventional type, the bed is folded in three parts under the seat; in this type, the sofa bed has a structure of its own, inside of which the bed is closed. After removing the sofa cushions, the bedspring and the mattress can be extracted; the sofa backrest will act as a bedhead and the armrests as bed edges. In the folding type, the whole bed structure can be folded into three parts, one of which remains vertical to act as a sofa backrest, while the other two fold under the backrest so as to form the sofa seat; in practice, the bed folded into three parts forms the sofa.

The flip-open type is quite a recent solution, according to which the sofa is divided into two parts, i.e. the backrest and the seat; when transforming the sofa into a bed, these two parts are positioned horizontally to form the bed, in particular by means of a system of horizontal hinges.

In drawer-style sofas, a bedspring comes out of the seat and joins the latter, thus forming the bed; this solution is rather uncomfortable because the mattresses are separate, and generally a depression is created in the middle of the bed.

The present invention is based on the idea that the solutions known in the art are still inadequate and insufficient to optimally fulfill the need for saving space.

In fact, even when closed, a sofa bed of the above-described types still takes considerable room and does not allow to freely tread upon the surface it occupies.

A further drawback of the solutions known in the art is that the device is difficult to open; also, it often happens that, due to their dimensions, they must be moved bodily before being opened.

In addition, the frequent opening and closing of the sofa bed causes wear of both the gears and the mattress, which is subject to continual stress as it is repeatedly folded and unfolded. Further a seat is known from EP 1207074. In this frame, it is the main object of the present invention to provide a rest structure, in particular for a vehicle, conceived in a manner such as to overcome the drawbacks of prior-art solutions.

In particular, it is one object of the present invention to provide a rest structure, in particular for a vehicle, which is realized in such a way as to optimally fulfill the need for saving space.

It is another object of the present invention to provide a rest structure, in particular for a vehicle, which is realized in such a way as to allow to freely tread upon the surface occupied by it.

It is a further object of the present invention to provide a rest structure, in particular for a vehicle, which is realized in such a way that the opening thereof poses no problems and the parts thereof are not excessively stressed.

Said objects are achieved by the present invention through a rest structure, in particular for a vehicle, incorporating the features set out in the appended claims, which are intended as an integral part of the present description.

Further objects, features and advantages of the present invention will become apparent from the following detailed description and from the annexed drawings, which are supplied by way of non-limiting example, wherein:
- Figs. 1a and 1b are perspective views of a rest structure, in particular for a vehicle, respectively in a first and a second operating conditions;
- Fig. 2 is a perspective view of a portion of the rest structure according to the present invention;
- Figs. 3a-3c show side views of a first operating sequence of the rest structure according to the present invention;
- Figs. 4a-4c show side views of a second operating sequence of the rest structure according to the present invention;
- Fig. 5 shows an example of utilization of the rest structure according to the present invention.

Referring now to the annexed drawings, reference numeral 1 designates as a whole a rest structure, in particular for a vehicle 100, according to the present invention.

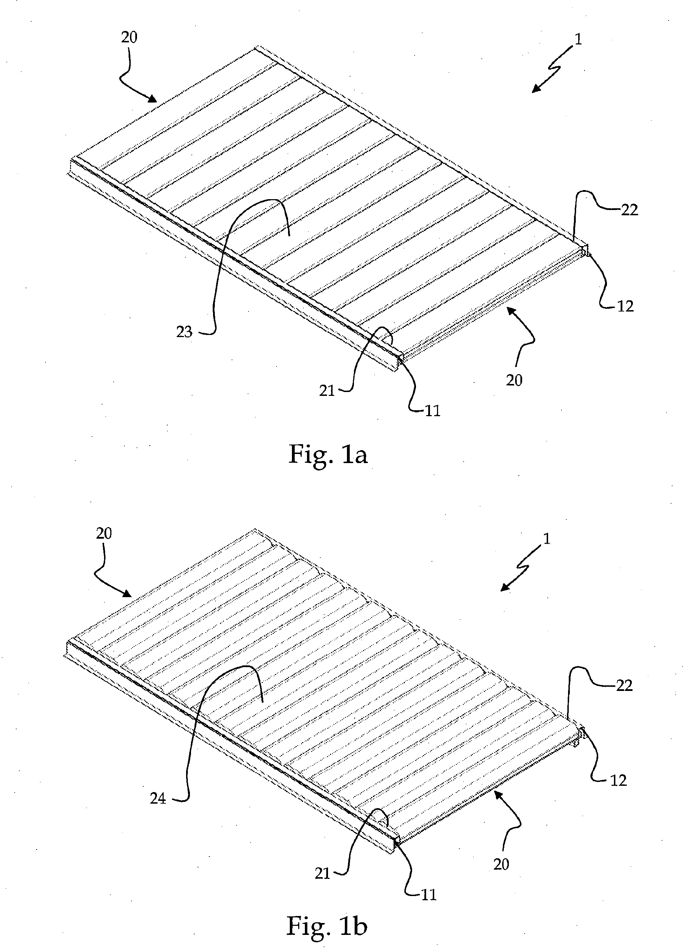

It must be pointed out that, in the present description and in the appended claims, the solutions defined as a "rest structure" are solutions that may be used by a user in order to, without distinction, rest his/her own body in a stretched or seated position, such as, for example, a bed, a sofa, a deck chair, and the like. Said structure 1, shown in detail in Figs. 1 to 4c, comprises:
- a first 11 and a second 12 longitudinal portions;
- a plurality of slats 20 arranged in a substantially parallel manner, each slat 20 having a first end 21 associated with said first portion 11 and a second end 22 associated with said second portion 12.

Preferably, said first portion 11 and second portion 12 of the structure 1 are substantially parallel; it is clear that they may also be made up of several parts, e.g. joined together. In addition, as can be seen in the annexed drawings, each slat 20 is arranged parallel to a contiguous slat 20, so as to form a substantially continuous surface together with said contiguous slat 20.

In accordance with the present invention, each slat 20 comprises at least one first side 23 with a first surface and at least one second side 24 with a second surface, different from said first surface.

Furthermore, said structure 1 comprises moving means (designated as a whole by reference numeral 30 in the annexed drawings) associated with at least one of said first end 21 and second end 22 to cause each of said slats 20 to rotate in a manner such that said structure 1 can switch at least from a first operating condition (shown in Figs. 1a, 2, 3a and 4a), wherein each slat 20 has the first side 23 facing upwards, to a second operating condition (shown in Figs. 1b, 3c and 4c), wherein each slat 20 has the second side 24 facing upwards.

In the annexed Figs. 1 to 4c, it can be observed that each slat 20 is shaped substantially like a rectangular parallelepipedon; as a consequence, in said first operating condition each slat 20 has the first side 23 facing upwards and the second side 24 facing downwards, and in said second operating condition each slat 20 has the first side 23 facing downwards and the second side 24 facing upwards.

It is however clear that each slat 20 may have a different shape than the one shown in the annexed drawings; for example, it may have a substantially square cross-section. In such a situation, each slat 20 may have up to four sides having different surfaces and, in particular, in said first operating condition each slat 20 may have the first side 23 facing upwards and the second side 24 facing a side of the structure 1, whereas in said second operating condition each slat 20 may have the second side 24 facing upwards and the first side 23 facing a side of the structure 1.

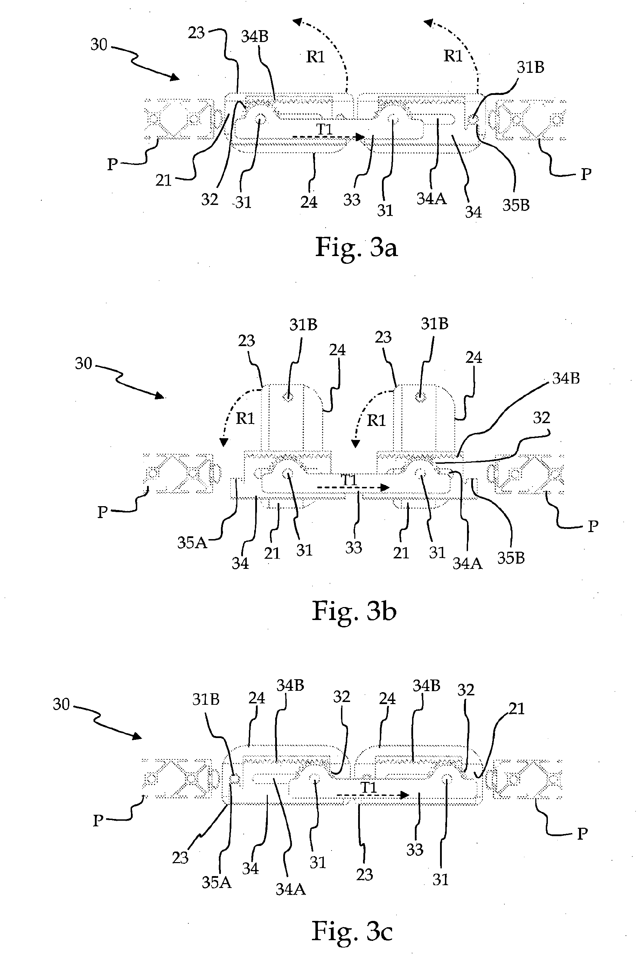

It should be noted that, in accordance with the present invention, the terms "upwards", "downwards" and "side" refer to a condition of use of the structure 1 according to the present invention, i.e. a condition wherein said structure 1 is associated with a respective installation plane P (shown in Figs. 3a to 4c).

It must be pointed out that said first 11 and second 12 longitudinal portions may also be constituted, at least partially, by said moving means 30 and/or by said installation plane P.

Each slat 20 may possibly comprise bevelled corners to avoid any interference during the rotation of each slat 20.

Preferably, said first side 23 is manufactured with a first surface made of rigid material, and said second side 24 is manufactured with a second surface made of soft material. For example, the first side 23 may be fitted with a first surface made of wood and/or squares and/or tiles and/or a similar material; conversely, the second side 24 may be fitted with a second surface made of an elastic and/or flexible and/or padded material.

In substance, in the first operating condition the plurality of slats 20 creates a single surface, in particular a rigid one, which can be trodden upon by a user or used as a worktop (e.g. a table or a similar structure); on the contrary, in said second operating condition the plurality of slats 20 creates a single surface, in particular a soft one, which is adapted to be used by a user as a sunbed or a seat.

Furthermore, the first side 23 and/or the second side 24 of the plurality of slats 20 may be flat or saddle-backed, horizontal or inclined, or may feature plane changes.

It is clear from the above description that the structure 1 according to the present invention allows to optimally fulfill the need for saving space.

In fact, the structure 1 according to the present invention allows one to tread upon the surface it occupies or use the same space as a sunbed or a seat by simply actuating the moving means 30.

Moreover, the particular design of the structure 1 avoids any problems due to repeated folding and unfolding; this prevents the parts thereof from undergoing excessive stresses.

The fact that the structure 1 may comprise a variable number of slats 20 makes said structure 1 modular and versatile, in that the number of slats 20 can be varied depending on the dimensions of the installation plane P that will receive it and/or on the intended use thereof (e.g. if the structure 1 is intended for use as a seat or a sunbed) and/or on specific user's requests and needs.

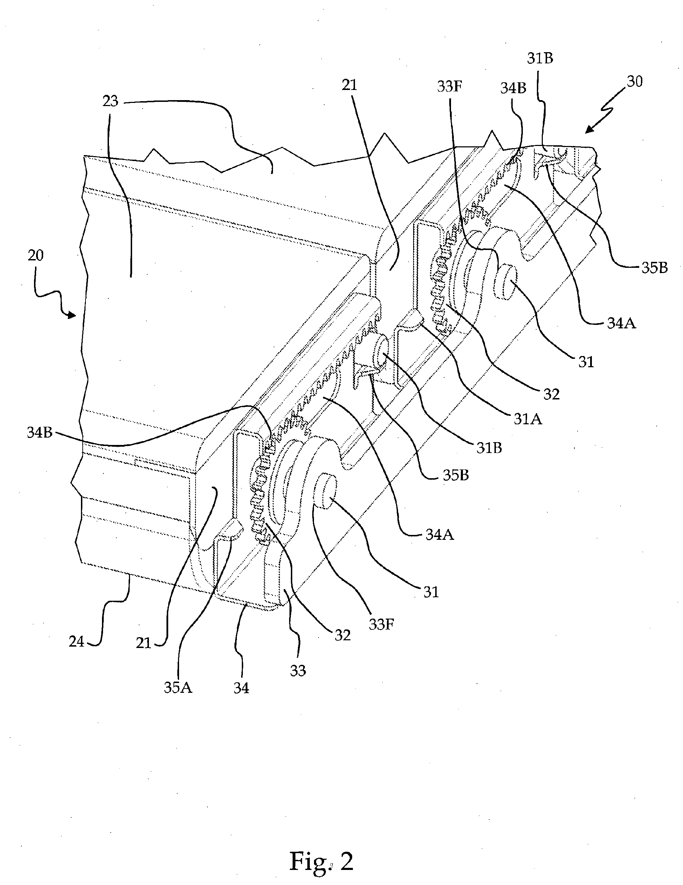

In accordance with the present invention, said moving means 30 (which are particularly visible in Figs. 2, 3a to 3c and 4a to 4c) are associated with each slat 20 to determine a substantially simultaneous rotation of each slat 20 in a same direction of rotation R1, R2.

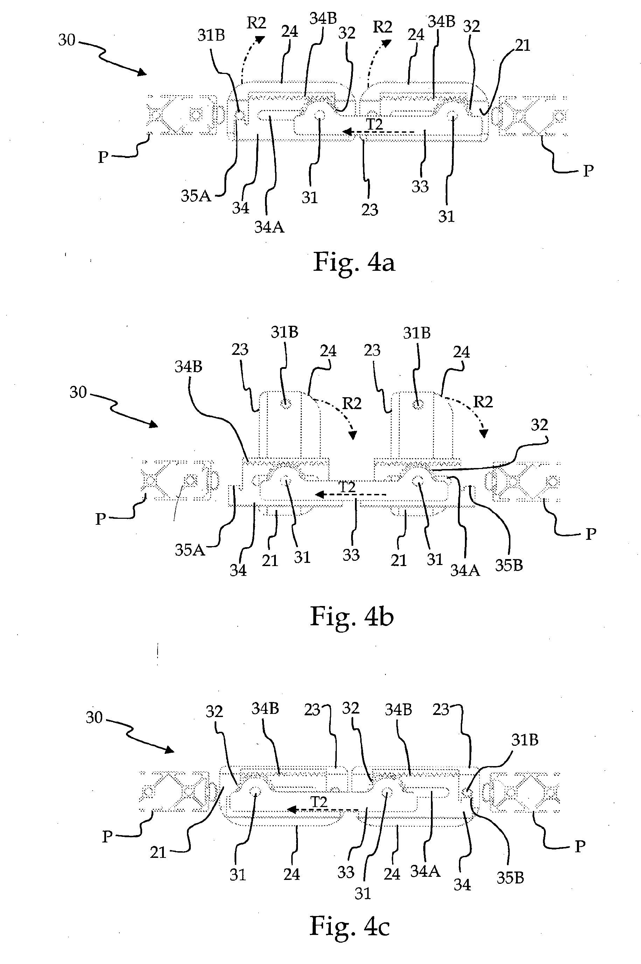

In particular, said same direction of rotation R1, R2 comprises a first direction of rotation R1 and a second direction of rotation R2 (indicated in Figs. 3a-3c and in Figs. 4a-4c by dashed-dotted arrows), which will be explained more in detail below.

The annexed drawings show a preferred embodiment of the moving means 30 according to the present invention. It should be noted that, in said drawings, the moving means 30 are represented in association with only the first end 21 of each slat 20; it is however clear that they may be likewise also associated with the second end 22 of each slat 20.

In particular, in said preferred embodiment the moving means 30 comprise a pin 31 integral with at least one of said first end 21 and second end 22 of each slat 20, said pin 31 being associated with a toothed wheel 32.

The moving means 30 also comprise at least one bracket 33 having a plurality of holes 33F, each hole 33F being adapted to receive the pin 31 of one slat 20, thus allowing it to rotate therein; preferably, said at least one bracket 33 is realized in such a way that its length is substantially equal to the sum of one of the ends 21, 22 of the plurality of slats 20. Moreover, in an operating condition the toothed wheel 32 is preferably positioned between the end 21, 22 of each slat 20 and the hole 33F of the bracket 33.

The moving means 30 comprise a profile 34 comprising:
- an elongated hole 34A for allowing the insertion of the pin 31;
- a ratchet 34B adapted to engage with the toothed wheel 32.

In Figs. 3a-3c one can see that a first substantially linear translation (indicated in said figures by a dashed arrow marked with reference T1) of the bracket 33 simultaneously causes the following:
- interference between the toothed wheel 32 and the ratchet 34B, causing the toothed wheel 32 to rotate in a first direction of rotation R1;
- rotation of the pin 31, in said first direction of rotation R1, within the hole 33F of the bracket 33;
- simultaneous rotation and sliding of the pin 31 within the elongated hole 34A of the profile 34.

As a result, since the pin 31 is integral with at least one of said first end 21 and second end 22 of each slat 20, said first translation T1 of the bracket 33 causes a simultaneous rotation of each slat 20 in a first direction of rotation R1.

It is clear that, if the bracket 33 were moved through a second substantially linear translation T2 in a direction opposite to the first translation T1 (said second translation T2 being indicated in Figs. 4a-4c by a dashed arrow), the set composed of the toothed wheel 32 and the pin 31 would cause a simultaneous rotation of each slat 20 in a second direction of rotation R2.

Preferably, the structure 1 comprises a first element 35A and a second element 35B adapted to act as end-of-travel stops for the first direction of rotation R1 and for the second direction of rotation R2, respectively, of each slat 20, in particular said first element 35A and second element 35B being provided on the profile 34.

In particular, said first element 35A and second element 35B act as abutment elements for a second pin 31B integral with at least one of said first end 21 and second end 22 of each slat 20.

In a preferred embodiment, said first element 35A and second element 35B are substantially shaped like fins, in particular obtained by bending a portion of said profile 34.

The particular realization of the moving means 30 according to the present invention allows to provide a structure 1 which proves to be safe and solid in both of the above-described operating conditions, thus avoiding any risks for the user. In fact, said moving means ensure great solidity of the structure 1 in both the first and the second operating conditions, preventing any undesired rotation of the slats 20, e.g. when a user walks upon it.

Preferably, the structure 1 according to the present invention comprises a drive system (not shown in the drawings), in particular of the electric or manual type, to obtain said first translation T1 and/or said second translation T2 of the bracket 33.

In addition, the structure 1 according to the present invention may comprise a water collection and/or drain system (not shown in the drawings), so that said structure 1 can be installed in outdoor environments, in particular for nautical applications.

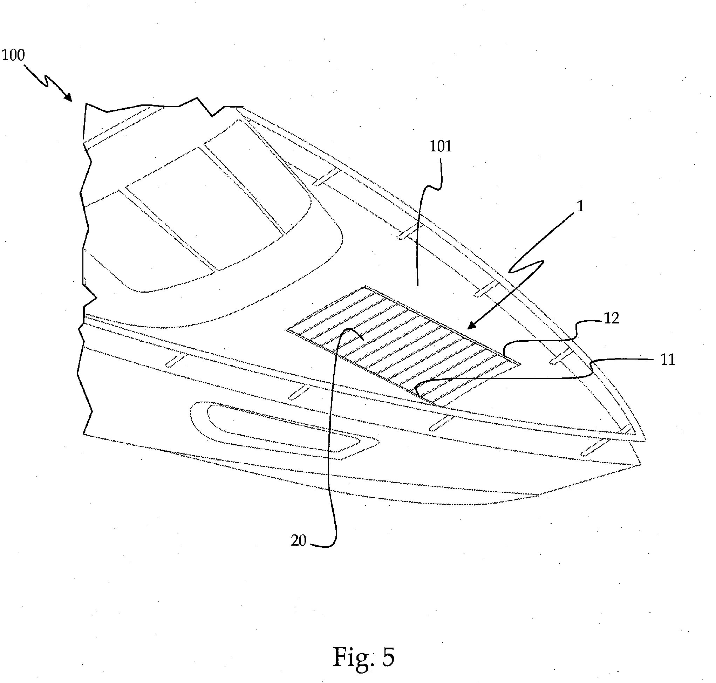

In fact, as can be seen in the annexed Fig. 5, said vehicle may consist of a boat 100; in such a solution, the structure 1 may be associated with a bow area 101 of said boat 100, so as to become a treadable surface of said bow area 101 which, if necessary, can be easily transformed into a sunbed, a deck chair or a seat.

The structure 1 according to the present invention may comprise a covering system (not shown in the drawings) for protecting the area where the moving means 30 are arranged, in particular for aesthetical and/or safety reasons.

The advantages of a rest structure 1 according to the present invention are apparent from the above description.

In particular, such advantages consist in the fact that the structure 1 according to the present invention allows to optimally fulfill the need for saving space in the installation plane P it is associated with.

In fact, the structure 1 of the present invention allows one to freely tread upon the surface it occupies or else to use the same space as a sunbed or a seat.

The particular design of the structure 1 also avoids any problems due to repeated folding and unfolding, resulting in the parts thereof not being subjected to excessive stress.

Another advantage of the structure 1 according to the present invention is that it has very good modularity and versatility characteristics, in that it may comprise a variable number of slats 20, in particular depending on the dimensions of the installation plane P that will receive it and/or on the intended use thereof and/or on the user's requests and needs.

Another advantage of the structure 1 according to the present invention is that the particular realization of the moving means 30 allows to provide a structure 1 which is safe and solid in both of its possible operating conditions.

The rest structure described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described rest structure, but may be subject to many modifications, improvements or replacements of equivalent parts and elements without departing from the inventive idea, as clearly specified in the following claims.

## Claims

1. A rest structure (1) of a vehicle (100), comprising:
- a first (11) and a second (12) longitudinal portions;
- a plurality of slats (20) arranged in a substantially parallel manner, each slat (20) having a first end (21) associated with said first portion (11) and a second end (22) associated with said second portion (12),
said structure (1) being **characterized in that**
each slat (20) comprises at least one first side (23) with a first surface and at least one second side (24) with a second surface, different from said first surface, and **in that**
said structure (1) comprises moving means (30) associated with at least one of said first end (21) and second end (22) to cause each of said slats (20) to rotate in a manner such that said structure (1) can switch from a first operating condition, wherein each slat (20) has said first side (23) facing upwards, to a second operating condition, wherein each slat (20) has said second side (24) facing upwards.

2. A structure (1) according to claim 1, **characterized in that** each slat (20) is shaped substantially like a rectangular parallelepipedon, and in said first operating condition each slat (20) has said first side (23) facing upwards and said second side (24) facing downwards, whereas in said second operating condition each slat (20) has said first side (23) facing downwards and said second side (24) facing upwards.

3. A structure (1) according to one or more of the preceding claims, **characterized in that** said first side (23) has a first surface made of a rigid material, and said second side (24) has a second surface made of a soft material.

4. A structure (1) according to one or more of the preceding claims, **characterized in that** said moving means (30) are associated with each slat (20) to determine a substantially simultaneous rotation of each slat (20) in a same direction of rotation (R1, R2).

5. A structure (1) according to one or more of the preceding claims, **characterized in that** said moving means (30) comprise a pin (31) integral with at least one of said first end (21) and second end (22) of each slat (20), said pin (31) being associated with a toothed wheel (32).

6. A structure (1) according to claim 5, **characterized in that** said moving means (30) comprise at least one bracket (33) having a plurality of holes (33F), each hole (33F) being adapted to receive the pin (31) of one slat (20), thus allowing it to rotate therein.

7. A structure (1) according to claim 6, **characterized in that** said at least one bracket (33) is realized in such a way that its length is substantially equal to the sum of one of the ends (21, 22) of the plurality of slats (20).

8. A structure (1) according to one or more of claims 5 to 7, **characterized in that** said moving means (30) comprise a profile (34) comprising:
- an elongated hole (34A) for allowing the insertion of the pin (31);
- a ratchet (34B) adapted to engage with the toothed wheel (32).

9. A structure (1) according to one or more of the preceding claims, **characterized in that** it comprises a drive system, in particular of the electric or manual type, to obtain a first translation (T1) or a second translation (T2) of the bracket (33) and cause each slat (20) to rotate simultaneously in a first direction of rotation (R1) or in a second direction of rotation (R2), respectively.

10. A structure (1) according to claim 9, **characterized in that** it comprises a first element (35A) and a second element (35B) adapted to act as end-of-travel stops for the first direction of rotation (R1) and for the second direction of rotation (R2), respectively, of each slat (20), in particular said first element (35A) and second element (35B) being provided on the profile (34).

11. A structure (1) according to claim 10, **characterized in that** said first element (35A) and said second element (35B) act as abutment elements for a second pin (31B) integral with at least one of said first end (21) and said second end (22) of each slat (20).

12. A structure (1) according to one or more of the preceding claims, **characterized in that** it comprises a water collection and/or drain system.

13. A structure (1) according to one or more of the preceding claims, **characterized in that** it comprises a covering system for protecting the area where the moving means (30) are arranged.

14. A structure (1) according to one or more of the preceding claims, **characterized in that** said vehicle is a boat (100).

15. A vehicle (100) comprising a rest structure (1) according to one or more of claims 1 to 14.

## Patentansprüche

1. Ruhestruktur (1) eines Fahrzeugs (100), umfassend:
- einen ersten (11) und einen zweiten (12) Längsabschnitt;
- eine Mehrzahl von Leisten (20), die in einer im Wesentlichen parallelen Weise angeordnet sind, wobei jede Leiste (20) ein erstes Ende (21), das mit dem ersten Abschnitt (11) verbunden ist, und ein zweites Ende (22), das mit dem zweiten Abschnitt (12) verbunden ist, aufweist,
wobei die Struktur (1) **dadurch gekennzeichnet ist,**
**dass** jede Leiste (20) zumindest eine erste Seite (23) mit einer ersten Oberfläche und zumindest eine zweite Seite (24) mit einer zweiten Oberfläche, die von der ersten Oberfläche verschieden ist, umfasst, und
**dass** die Struktur (1) Bewegungsmittel (30) umfasst, die mit zumindest einem des ersten Endes (21) und des zweiten Endes (22) verbunden sind, um zu bewirken, dass jede der Leisten (20) sich in einer Weise dreht, dass die Struktur (1) von einem ersten Betriebszustand, in dem jede Leiste (20) die erste Seite (23) nach oben zeigen hat, zu einen zweiten Betriebszustand, in dem jede Leiste (20) die zweite Seite (24) nach oben zeigen hat, umschalten kann.

2. Struktur (1) nach Anspruch 1, **dadurch gekennzeichnet**, das jede Leiste (20) im Wesentlichen wie ein rechteckiges Parallelepiped geformt ist, und dass in dem ersten Betriebszustand jede Leiste (20) die erste Seite (23) nach oben zeigen und die zweite Seite (24) nach unten zeigen hat, wobei in dem zweiten Betriebszustand jede Leiste die erste Seite (23) nach unten zeigen und die zweite Seite (24) nach oben zeigen hat.

3. Struktur (1) nach einem oder mehreren der vorangegangenen Ansprüche, **dadurch gekennzeichnet, dass** die erste Seite (23) eine erste Oberfläche aufweist, die aus einem starren Material gemacht ist, und die zweite Seite (24) eine zweite Oberfläche aufweist, die aus einem weichen Material gemacht ist.

4. Struktur (1) nach einem oder mehreren der vorangegangenen Ansprüche, **dadurch gekennzeichnet, dass** die Bewegungsmittel (30) mit jeder Leiste (20) verbunden sind, um eine im Wesentlichen gleichzeitige Drehung jeder Leiste (20) in einer selben Drehrichtung (R1, R2) festzulegen.

5. Struktur (1) nach einem oder mehreren der vorangegangenen Ansprüche, **dadurch gekennzeichnet, dass** die Bewegungsmittel einen Pin (31) umfassen, der integral mit zumindest einem des ersten Endes (21) und des zweiten Endes (22) jeder Leiste (20) ist, wobei der Pin (31) mit einem gezahnten Rad (32) verbunden ist.

6. Struktur (1) nach Anspruch 5, **dadurch gekennzeichnet, dass** die Bewegungsmittel (30) zumindest eine Halterung (33) umfassen, die eine Mehrzahl von Löchern (33F) aufweist, wobei jedes Loch (33F) angepasst ist, den Pin (31) einer Leiste (20) aufzunehmen, so dass ermöglicht wird, dass dieser sich darin dreht.

7. Struktur (1) nach Anspruch 6, **dadurch gekennzeichnet, dass** die zumindest eine Halterung (33) in einer solchen Weise realisiert ist, dass ihre Länge im Wesentlichen gleich der Summe eines der Enden (21, 22) der Mehrzahl von Leisten (20) ist.

8. Struktur (1) nach einem oder mehreren der Ansprüche 5 bis 7, **dadurch gekennzeichnet, dass** die Bewegungsmittel (30) ein Profil (34) umfassen, das umfasst:
- ein längliches Loch (34A) zum Ermöglichen des Einbringens des Pins (31);
- eine Ratsche (34B), die angepasst ist, mit dem gezahnten Rad (32) einzugreifen.

9. Struktur (1) nach einem oder mehreren der vorangegangen Ansprüche, **dadurch gekennzeichnet, dass** diese ein Antriebssystem umfasst, insbesondere vom elektrischen oder manuellen Typ, um eine erste Translation (T1) oder eine zweite Translation (T2) der Halterung (33) zu erhalten, und zu bewirken, dass jede Leiste (20) sich gleichzeitig jeweils in eine erste Drehrichtung (R1) oder in eine zweite Drehrichtung (R2) dreht.

10. Struktur (1) nach Anspruch 9, **dadurch gekennzeichnet, dass** diese ein erstes Element (35A) und ein zweites Element (35B) umfasst, die angepasst sind, jeweils als Ende-der-Bewegung-Stopps für die erste Drehrichtung (R1) und für die zweite Drehrichtung (R2) jeder Leiste (20) zu wirken, wobei das erste Element (35A) und das zweite Element (35B) insbesondere an dem Profil (34) bereitgestellt sind.

11. Struktur (1) nach Anspruch 10, **dadurch gekennzeichnet, dass** das erste Element (35A) und das zweite Element (35B) als Widerlagerelemente für einen zweiten Pin (31 B), der integral mit zumindest einem des ersten Endes (21) und des zweiten Endes (22) jeder Leiste (20) ist, zu wirken.

12. Struktur (1) nach einem oder mehreren der vorangegangenen Ansprüche, **dadurch gekennzeichnet, dass** diese ein Wassersammlungs- und/oder ein Abflusssystem umfasst.

13. Struktur (1) nach einem oder mehreren der vorangegangenen Ansprüche, **dadurch gekennzeichnet, dass** diese ein Abdecksystem zum Schützen des Bereichs, an dem die Bewegungsmittel (30) angeordnet sind, umfasst.

14. Struktur (1) nach einem oder mehreren der vorangegangenen Ansprüche, **dadurch gekennzeichnet, dass** das Fahrzeug ein Boot (100) ist.

15. Fahrzeug (100) umfassend eine Ruhestruktur (1) nach einem oder mehreren der Ansprüche 1 bis 14.

## Revendications

1. Structure de repos (1) pour un véhicule (100), comportant :
- une première (11) et une deuxième (12) parties longitudinales ;
- une pluralité de lattes (20) disposées d'une façon essentiellement parallèle, chaque latte (20) présentant une première extrémité (21) associée à ladite première partie (11) et une deuxième extrémité (22) associée à ladite deuxième partie (12),
ladite structure (1) étant **caractérisée en ce que** chaque latte (20) comprend au moins un premier côté (23) doté d'une première surface et au moins un deuxième côté (24) doté d'une deuxième surface, différente de ladite première surface,
et **en ce que**
ladite structure (1) comprend des moyens de déplacement (30) associés à au moins l'une de ladite première extrémité (21) et de ladite deuxième extrémité (22) pour entraîner chacune desdites lattes (20) à tourner d'une manière telle que ladite structure (1) puisse passer d'une première configuration fonctionnelle, dans laquelle chaque latte (20) présente ledit premier côté (23) faisant face vers le haut, à une deuxième configuration fonctionnelle dans laquelle chaque latte (20) présente ledit deuxième côté (24) faisant face vers le haut.

2. Structure (1) selon la revendication 1, **caractérisée en ce que** chaque latte (20) est configurée essentiellement sous la forme d'un parallélépipède rectangle, et **en ce que** dans ladite première configuration fonctionnelle chaque latte (20) présente ledit premier côté (23) faisant face vers le haut et ledit deuxième côté (24) faisant face vers le bas, tandis que dans ladite deuxième configuration fonctionnelle, chaque latte (20) présente ledit premier côté (23) faisant face vers le bas et ledit deuxième côté (24) faisant face vers le haut.

3. Structure (1) selon l'une ou plusieurs des revendications précédentes, **caractérisée en ce que** ledit premier côté (23) présente une première surface constituée d'un matériau rigide et **en ce que** ledit deuxième côté (24) présente une deuxième surface constituée d'un matériau souple.

4. Structure (1) selon l'une ou plusieurs des revendications précédentes, **caractérisée en ce que** lesdits moyens de déplacement (30) sont associés à chaque latte (20) afin de déterminer une rotation essentiellement simultanée de chaque latte (20) dans une même direction de rotation (R1, R2).

5. Structure (1) selon l'une ou plusieurs des revendications précédentes, **caractérisée en ce que** lesdits moyens de déplacement (30) comprennent une broche (31) solidaire d'au moins l'une de ladite première extrémité (21) et de ladite deuxième extrémité (22) de chaque latte (20), ladite broche (31) étant associée à une roue dentée (32).

6. Structure (1) selon la revendication 5, **caractérisée en ce que** lesdits moyens de déplacement (30) comprennent au moins un support (33) présentant une pluralité de trous (33F), chaque trou (33F) étant conçu pour recevoir la broche (31) d'une latte (20), lui permettant ainsi de tourner en lui.

7. Structure (1) selon la revendication 6, **caractérisée en ce que** ledit au moins un support (33) est réalisé d'une manière telle que sa longueur est essentiellement égale à la somme de l'une des extrémités (21, 22) de la pluralité des lattes (20).

8. Structure (1) selon l'une ou plusieurs des revendications 5 à 7, **caractérisée en ce que** lesdits moyens de déplacement (30) comprennent un profilé (34) comprenant :
- un trou de forme allongée (34A) pour permettre l'insertion de la broche (31) ;
- un cliquet (34B) conçu pour s'engager avec la roue dentée (32).

9. Structure (1) selon l'une ou plusieurs des revendications précédentes, **caractérisée en ce qu'**elle comprend un système de commande, en particulier du type manuel ou électrique, pour obtenir une première translation (T1) ou une deuxième translation (T2) du support (33) et pour entraîner respectivement chaque latte (20) à tourner simultanément dans une première direction de rotation (R1) ou dans une deuxième direction de rotation (R2).

10. Structure (1) selon la revendication 9, **caractérisée en ce qu'**elle comprend un premier élément (35A) et un deuxième élément (35B) conçus pour agir comme des butées d'arrêt de fin de course destinées à la première direction de rotation (R1) et à la deuxième direction de rotation (R2), respectivement, de chaque latte (20), en particulier ledit premier élément (35A) et ledit deuxième élément (35B) qui sont prévus sur le profilé (34).

11. Structure (1) selon la revendication 10, **caractérisée en ce que** ledit premier élément (35A) et ledit deuxième élément (35B) agissent comme des éléments de butée destinés à une deuxième broche (31B) solidaire d'au moins l'une de ladite première extrémité (21) et de ladite deuxième extrémité (22) de chaque latte (20).

12. Structure (1) selon l'une ou plusieurs des revendications précédentes, **caractérisée en ce qu'**elle comprend un système de collecte et/ou de drainage de l'eau.

13. Structure (1) selon l'une ou plusieurs des revendications précédentes, **caractérisée en ce qu'**elle comporte un système de couverture pour protéger la zone dans laquelle les moyens de déplacement (30) sont disposés.

14. Structure (1) selon l'une ou plusieurs des revendications précédentes, **caractérisée en ce que** ledit véhicule est un bateau (100).

15. Véhicule (100) comportant une structure de repos (1) selon l'une ou plusieurs des revendications 1 à 14.
